# EUROPÄISCHE PATENTSCHRIFT

(11) **EP 3 788 306 B1**
(45) Veröffentlichungstag und Bekanntmachung des Hinweises auf die Patenterteilung: **20.11.2024**
(21) Anmeldenummer: 19720018.1
(22) Anmeldetag: 03.05.2019
(51) Int. Cl.: F24C 15/20

(54) **VERBINDUNGSELEMENT**
A CONNECTING ELEMENT
UN ÉLÉMENT DE LIAISON

(30) Priorität: 04.05.2018 DE 102018110780
(43) Veröffentlichungstag der Anmeldung: 10.03.2021
(73) Patentinhaber: Caso Holding GmbH, 59757 Arnsberg (DE)
(72) Erfinder: BERLING, Udo, 48496 Hopsten (DE)
(74) Vertreter: Geskes, Christoph
(86) Internationale Anmeldenummer: PCT/EP2019/061327
(87) Internationale Veröffentlichungsnummer: WO 2019/211417

(56) Entgegenhaltungen:
- WO-A1-2018/050719
- AU-B2- 2014 259 588
- DE-A1- 102016 207 087
- DE-U1- 202013 005 303
- DE-U1- 8 709 345
- JP-A- S6 030 916
- US-A- 2 674 991
- US-A- 4 446 849
- US-A1- 2018 073 745

## Beschreibung

Die Erfindung betriff eine Verbindungsanordnung für eine Kochstellenanordnung sowie ein Verbindungselement für eine Verbindungsanordnung.

Kücheninseln werden immer populärer und damit auch Luftreinigungsvorrichtungen, die unterhalb des Kochfeldes angeordnet sind, als Alternative zu Abzugshauben. Die Luftreinigungsvorrichtung wird unterhalb des Kochfeldes, in der Regele in einer Schublade des jeweiligen Küchenmöbels in das das Kochfeld eingefasst ist, angeordnet. Der je nach Küchenmöbel variierende Abstand zwischen Kochfeld und Luftreinigungsvorrichtung wird zumeist durch individuell angepasste Bauteile überbrückt, um die Luftreinigungsvorrichtung so dicht wie möglich an das Kochfeld zu rücken. Ein Lüftungsrohr wird von dem Kochfeld her in die Luftreinigungsvorrichtung eingesteckt. Der Einbau derartiger Kochstellenanordnungen ist aufwendig.

US 2,674,991 A1 offenbart eine Luftabsaugung einer Kochstelle mit einem teleskopierbaren Kaminrohr, das Kochwrasen zu einem Untertisch-Ventilator führt. DE 10 2016 207087 A1 offenbart eine Luftabsaugvorrichtung mit einem Absaugelement, das in mindestens zwei Ausfahrpositionen gebracht werden kann. WO 2018/050719 A1 offenbart eine Kochstellenanordnung mit einem Untertisch-Absauggebläse. DE 87 09 345 U1 offenbart einen Stützsockel für Kachelöfen. AU 2014 259 588 B2 offenbart eine Absauganlage mit einem Kamin, der hinter einem Kochfeld auf und ab-fahrbar ist. US 4,446,849 A offenbart eine Kochstellenanordnung mit einem Untertisch-Gebläse, das mittels eines rechteckigen Rohrs mit einem Kochfeld verbunden ist. DE 20 2013 005303 U1 offenbart ein Kochfeld mit einem zentral angeordneten Luftabzug und einem horizontal unter dem Kochfeld angeordneten Abluftkanal.

US 2018/073745 A1 offenbart eine Kochstellenanordnung mit einer Abluftanlage, deren Abluftrohr relativ zur Kochfläche in der Höhe verstellbar ist. JP S60 30916 A offenbart eine Kochstellenanordnung mit einer in der Höhe verstellbaren Dunstabzugshaube, die auch als Abdeckung für die Kochstelle fungiert.

Es ist Aufgabe der vorliegenden Erfindung, eine verbesserte Kochstellenanordnung bereitzustellen, die besonders einfach in ein Küchenmöbel gleich welcher Art eingebaut werden kann.

Die Aufgabe wird erfindungsgemäß gelöst durch eine Verbindungsanordnung für eine Kochstellenanordnung mit einem Kochfeld und mindestens einer unterhalb des Kochfeldes angeordneten Luftreinigungsvorrichtung, wobei die Verbindungsanordnung mindestens ein Verbindungselement, mindestens einen Stutzen und mindestens einen Adapter umfasst, wobei das Verbindungselement höhenverschiebbar im Adapter gelagert ist und mechanisch lösbar in dem Stutzen angeordnet ist, wobei das Verbindungselement einen ersten, in Einsteckrichtung des Verbindungselementes vorderen Endabschnitt aufweist, dessen diesem zugeordnete Stirnseite an die Oberfläche des Kochfeldes angrenzbar und der in einer Durchgangsöffnung des Kochfeldes mechanisch lösbar anordenbar ist, und wobei das Verbindungselement einen zweiten, in Einsteckrichtung des Verbindungselementes hinteren Endabschnitt aufweist, der höhenverschiebbar in der Luftreinigungsvorrichtung lagerbar ist, wobei mittels des Verbindungselementes das Kochfeld mit der Luftreinigungsvorrichtung derart verbindbar ist, dass Luft vom Kochfeld über das Verbindungselement zur Luftreinigungsvor-richtung leitbar ist, wobei das Verbindungselement zumindest ein Griffelement zum Herausziehen des Verbindungselements durch einen Benutzer aufweist.

Die nicht beanspruchte Kochstellenanordnung umfasst vorzugsweise mindestens ein Kochfeld, mindestens eine unterhalb des Kochfeldes angeordnete Luftreinigungsvorrichtung und mindestens ein Verbindungselement zur Verbindung des Kochfeldes mit der Luftreinigungsvorrichtung derart, dass Luft vom Kochfeld über das Verbindungselement zur Luftreinigungsvorrichtung leitbar ist, wobei die Luftreinigungsvorrichtung zumindest einen Adapter umfasst, wobei das Verbindungselement höhenverschiebbar im Adapter gelagert ist und das Verbindungselement mechanisch lösbar an dem Kochfeld angeordnet und höhenverschiebbar in der Luftreinigungsvorrichtung gelagert ist, wobei das Kochfeld zumindest einen Stutzen umfasst, der unterhalb einer Kochfläche des Kochfeldes angeordnet ist, wobei das Verbindungselement mechanisch lösbar in dem Stutzen angeordnet ist. Die Kochstellenanordnung kann vorteilhafterweise in verschiedenste Küchenmöbel, nicht nur von Kochinseln, mit unterschiedlichen Maßen eingebaut werden, da der unterschiedliche Abstand zwischen dem Kochfeld und der Luftreinigungsvorrichtung, der sich insbesondere durch unterschiedliche Schubladentiefen ergeben kann, durch die höhenverschiebbare Lagerung des Verbindungselements in der Luftreinigungsvorrichtung ausgeglichen wird.

Das Verbindungselement ist unterhalb des Kochfeldes angeordnet und damit nicht von au-ßen sichtbar. Es ist bevorzugt in einer Ansaugöffnung der Luftreinigungseinrichtung angeordnet, bevorzugt über einen Adapter. Das Verbindungselement ragt zumindest teilweise in ein Gehäuse der Luftreinigungsvorrichtung hinein, bevorzugt derart, dass es einem im Gehäuse der Luftreinigungsvorrichtung angeordneten Lüfterrad benachbart ist. Dieses Hineinragen erfolgt sowohl in einer Montagestellung und in einer Einbaustellung, in der eine Verbindung zum Kochfeld mit dem Verbindungselement hergestellt ist. Das Verbindungselement ist gleitend höhenverstellbar im Gehäuse der Luftreinigungsvorrichtung aufgenommen. In der Montagestellung ist das Verbindungselement zunächst über einen, bevorzugt maximalen, Verschiebeweg im Gehäuse aufgenommen, wobei der Verschiebeweg über Anschläge oder ähnliches am Verbindungselement und/oder im Gehäuse begrenzt sein kann. In der Montagestellung ist das Verbindungelement frei verschiebbar in der Luftreinigungsvorrichtung angeordnet, eine mechanisch lösbare Anordnung unterhalb des Kochfeldes erfolgt erst in der Einbaustellung. Dann wird die Luftreinigungsvorrichtung unter dem Kochfeld platziert. Anschließend wird zur Erzielung der Einbaustellung von oberhalb des Kochfeldes das Verbindungselement bis an eine Unterseite des Kochfeldes verschoben und dort mechanisch lösbar gelagert, beispielsweise in einem unterhalb des Kochfeldes angeordneten Stutzen. Durch die Anordnung des Verbindungselementes in der Luftreinigungsvorrichtung, insbesondere zumindest teilweise im Gehäuse, insbesondere in der Ansaugöffnung, wird eine kleinbauende Anordnung zur Verfügung gestellt, die einfach und optisch anspruchsvoll an unterschiedliche Baumaße von Kochstellen anordenbar ist. Dies wird durch die zumindest teileweise Integration des Verschiebeweges des Verbindungselementes in die Luftreinigungsvorrichtung, genauer in deren Gehäuse, erreicht.

Durch die mechanisch lösbare Anordnung des Verbindungselements kann dieses besonders einfach und schnell montiert und demontiert werden. Nach Demontage des Verbindungselements sind das Kochfeld und die Luftreinigungseinrichtung voneinander entkoppelt. Die Luftreinigungseinrichtung ist dann einnehmbar, beispielsweise aus einer Schublade des Küchenmöbels, in der die Luftreinigungsvorrichtung angeordnet ist. Die Luftreinigungseinrichtung kann durch die erfindungsgemäße Kochstellenanordnung vorteilhafterweise auch besonders einfach und schnell gewartet werden.

Das Kochfeld weist vorzugsweise zumindest eine Kochfläche auf. Die Kochfläche ist an einer Oberseite des Kochfeldes angeordnet. Die Kochfläche kann insbesondere eine Ceran- oder Induktionskochfläche sein. Die Kochfläche ist vorzugsweise in ein Küchenmöbel, insbesondere in die Arbeitsplatte eines Küchenunterschranks, eingefasst.

Das Verbindungselement kann unmittelbar oder mittelbar am Kochfeld angeordnet sein. Das Verbindungselement kann beispielsweise bei einer mittelbaren Anordnung benachbart zum Kochfeld in einem Küchenmöbel beziehungsweise der Arbeitsplatte des Küchenmöbels angeordnet sein.

Das Verbindungselement ist vorzugsweise in einer Durchgangsöffnung am Kochfeld angeordnet. Die Durchgangsöffnung kann alternativ oder kumulativ bei mehreren Öffnungen benachbart zum Kochfeld in dem Küchenmöbel beziehungsweise der Arbeitsplatte des Küchenmöbels, nahe dem Kochfeld, angeordnet sein.

Besonders bevorzugt weist das Kochfeld mindestens eine, bevorzugt genau eine zentrale, Durchgangsöffnung auf, wobei das Verbindungselement mechanisch lösbar in der Durchgangsöffnung angeordnet ist. Das Verbindungselement kann derart, beispielsweise in einer zentralen Position auf einem Kochfeld mit vier Kochstellen, die Luft besonders effektiv ableiten. Außerdem werden zusätzliche Anpassungen des Küchenmöbels in dem das Kochfeld beziehungsweise die Kochstellenanordnung eingefasst ist, vermieden, wodurch die erfindungsgemäße Kochstellenanordnung besonders schnell und einfach montierbar ist.

Das Verbindungselement ist bevorzugt vollständig durch die Durchgangsöffnung durchführbar. Auf diese Weise ist das Verbindungselement aus der Durchgangsöffnung zur Demontage entnehmbar. Zur Montage kann das Verbindungselement durch die Durchgangsöffnung wieder eingeführt werden.

Das Verbindungselement weist erfindungsgemäß zumindest ein Griffelement zum Herausziehen des Verbindungselements aus der Luftreinigungsvorrichtung oder der Durchgangsöffnung auf. Dem Benutzer wird derart eine werkzeugfreie Demontage des Verbindungselements ermöglicht. Er kann das Verbindungselement am Griffelement festhalten und herausziehen. Es ist auch denkbar, dass das Verbindungselement durch das Griffelement vom Benutzer gedreht werden kann, um eine mechanisch lösbare Befestigung wie einen Dreh- oder Bajonettverschluss zu lösen. Für eine verbesserte Hygiene können das Verbindungselement und die Luftreinigungsvorrichtung daher einfach gereinigt werden.

Das Griffelement umfasst vorzugsweise zumindest einen Steg und vorzugsweise mindestens zwei Stege. Vorzugsweise sind zumindest vier Stege kreuzförmig zueinander angeordnet, um einen besonders robusten Griff auszubilden. Die Stege sind vorzugsweise in einem rechten Winkel zueinander angeordnet. Der Steg beziehungsweise die Stege können zur Erhöhung der Stabilität als Doppelstege ausgebildet sein, die weiter bevorzugt zueinander in einem rechten Winkel angeordnet sind.

Das Griffelement kann auch als Träger für Werbung, als Durchfallschutz oder zur Reduzierung von Ansauggeräuschen ausgebildet sein. Das Griffelement kann eine flächige Mittelplatte aufweisen, in der sich die Stege des Griffelements kreuzen. Die Mittelfläche kann als Träger für Werbung dienen.

Die Kochstellenanordnung kann zur mechanisch lösbaren Anordnung des Verbindungselements am Kochfeld mindestens ein Befestigungsmittel aufweisen. Das Befestigungsmittel umfasst besonders bevorzugt mindestens einen Rastverschluss. Die Kochstellenanordnung kann bevorzugt zumindest eine Nute, eine Feder, einen Rastvorsprung und eine Aussparungen aufweisen. Das Befestigungsmittel ist vorzugsweise als Stutzen ausgebildet. Das Befestigungsmittel kann auch einen Dreh- oder Bajonettverschluss umfassen. Die Kochstellenanordnung weist beispielsweise mindestens ein Gewinde auf. Es ist auch denkbar, dass das Befestigungsmittel einen Magneten umfasst.

Das Verbindungselement weist bevorzugt zumindest eine Nut für eine mechanisch lösbare Anordnung am Kochfeld auf. Die Nut ist vorzugsweise als eine umlaufende Ringnut ausgebildet.

Das Verbindungselement kann als länglicher Hohlkörper mit mindestens zwei Öffnungen ausgebildet sein. Das Verbindungselement ist besonders bevorzugt rohrförmig ausgebildet. Das Verbindungselement weist vorzugsweise zwei Stirnseiten, nämlich eine obere und eine untere, und mindestens eine diese verbindende Mantelfläche auf. An den Stirnseiten ist vorzugsweise zumindest eine Öffnung ausgebildet. Das Verbindungselement weist besonders bevorzugt mindestens einen runden Querschnitt auf. Der Querschnitt kann oval ausgebildet sein. Auch andere, insbesondere eckige Querschnitte sind möglich. Das Verbindungselement kann beispielsweise einen quadratischen oder wabenförmigen Querschnitt aufweisen. Das Verbindungselement kann mehrere unterschiedliche Querschnitte aufweisen. Die Querschnitte können insbesondere zur Ausbildung von Anschlägen, Anlageflächen und Nuten mindestens einen vergleichsweise verengten Querschnitt aufweisen. Das Verbindungselement ist vorzugsweise aus Kunststoff ausgebildet. Das Verbindungselement kann auch aus Metall ausgebildet sein.

Das Verbindungselement weist erfindungsgemäß einen ersten, in einer Einsteckrichtung des Verbindungselementes vorderen Endabschnitt, dessen diesem zugeordnete obere Stirnseite bevorzugt eben an die Oberfläche des Kochfeldes angrenzt, auf, der in der Durchgangsöffnung mechanisch lösbar angeordnet ist. Am ersten Endabschnitt ist vorzugsweise ein vorbeschriebenes Befestigungsmittel, bevorzugt als Stutzen ausgebildet, angeordnet beziehungsweise ausgebildet. Besonders bevorzugt ist im ersten Endabschnitt die vorbeschriebene Nut angeordnet.

Das Verbindungselement weist erfindungsgemäß einen zweiten, in Einsteckrichtung des Verbindungselementes hinteren Endabschnitt auf, der höhenverschiebbar in der Luftreinigungsvorrichtung gelagert ist. Dem zweiten Endabschnitt ist die untere Stirnseite zugeordnet.

Die Kochstellenanordnung weist bevorzugt zumindest ein Aufsatzelement für das Verbindungselement auf. Das Aufsatzelement weist besonders bevorzugt zumindest teilweise den gleichen Querschnitt wie das Verbindungselement auf. Das Aufsatzelement ist vorzugsweise aus Kunststoff ausgebildet. Das Aufsatzelement ist als länglicher Hohlkörper ausgebildet und weist zwei Stirnseiten und eine diese verbindende Mantelfläche auf. Eine untere Stirnseite ist vorzugsweise zur Anordnung auf dem Verbindungselement ausgebildet. Das Aufsatzelement ist besonders bevorzugt rohrförmig beziehungsweise zylinderförmig ausgebildet. Das Aufsatzelement weist besonderes bevorzugt eine untere Öffnung auf, die an der unteren Stirnseite ausgebildet ist. Das Aufsatzelement weist besonders bevorzugt eine weitere, obere Öffnung auf, die an einer oberen Stirnfläche ausgebildet ist. Es kann auch vorgesehen sein, in der Mantelfläche des Aufsatzelementes mindestens eine Öffnung vorzusehen, wobei dann die weitere, obere Öffnung entfallen oder aber vorhanden sein kann. Mittel dem Aufsatzelement kann ein Lufteinzug unter dem Kochfeld beabstandet erfolgen, um beispielsweise die Höhe von Topfen zu berücksichtigen.

Das Verbindungselement kann zumindest einen radialen Anschlag für ein rohrförmiges Aufsatzelement aufweisen. Der Anschlag ist bevorzugt als radial umlaufener Rücksprung ausgebildet. Das Verbindungselement kann zumindest eine radiale Anlagefläche zum Aufstecken eines rohrförmigen Aufsatzelements aufweisen.

Um eine für die Luftreinigung vorteilhafte Verwirbelung der Luft zu erreichen, kann die erfindungsgemäße Kochstellenanordnung mindestens ein Luftführungselement beziehungsweise einen Drallgeber bevorzugt am Aufsatzelement und/oder am Verbindungselement aufweisen. Das mindestens eine Luftführungselement kann an einer Innenwandung des Aufsatzelements und/oder einer Innenwandung des Verbindungselements ausgebildet sein. Das Luftführungselement kann insbesondere im Bereich einer Öffnung des Aufsatzelements und/oder des Verbindungselements ausgebildet sein. Das Luftführungselement kann beispielsweise an dem vorbeschriebenen Griffelement ausgebildet sein.

Nicht erfindungsgemäß umfasst das Kochfeld als Befestigungsmittel zumindest einen Stutzen, der unterhalb einer Oberfläche des Kochfeldes angeordnet ist, wobei das Verbindungselement mechanisch lösbar in dem Stutzen angeordnet sein. Das Verbindungselement ist bevorzugt vollständig durch den Stutzen durchführbar ausgebildet, um eine einfache und schnelle Demontage zu ermöglichen.

Der Stutzen kann insbesondere als Rohraufnahme ausgebildet sein. Der Stutzen kann mindestens eine Aufnahmeöffnung für das Verbindungselement aufweisen. Der Innendurchmesser der Aufnahmeöffnung und der Außendurchmesser einer Außenfläche des Verbindungselements können im Wesentlichen gleich ausgebildet sein, so dass das Verbindungselement zumindest teilweise formschlüssig in der Aufnahmeöffnung angeordnet werden kann. Ebenso kann die Aufnahmeöffnung deckungsgleich zur Durchgangsöffnung des Kochfeldes ausgebildet sein.

Der Stutzen kann mindestens ein vorbeschriebenes Befestigungsmittel umfassen. Besonders bevorzugt weist der Stutzen zumindest einen Rastvorsprung auf. Der Rastvorsprung ist vorzugsweise innenseitig beziehungsweise in der Aufnahmeöffnung angeordnet. Bevorzugt weist der Stutzen mindestens vier Rastvorsprünge auf. Der Stutzen ist bevorzugt als separates Bauteil ausgebildet. Das Kochfeld kann einen integrierten Stutzen oder eine Aufnahme dafür aufweisen. Der Stutzen kann auch als Träger eines Sicherheitsschalters ausgebildet sein.

Der Stutzen weist vorzugsweise einen Flansch zur Befestigung an einer Unterseite des Kochfeldes oder der Kochfläche auf. Der Flansch kann eine Verrippung aufweisen, um eine besonders feste Klebeverbindung zu ermöglichen. Zur Vergrößerung der Oberfläche kann der Flansch mindestens einen seitlich abstehenden Flügel aufweisen. Besonders bevorzugt weist der Flansch zwei Flügel auf die sich gegenüberliegen. Unterseitig am Flügel kann mindestens eine Verstärkungsrippe ausgebildet sein, weiter bevorzugt drei Verstärkungsrippen. Unterseitig am Flügel kann ein Träger für einen Sicherungsschalter ausgebildet oder ein Sicherungsschalter angeordnet sein.

Der Stutzen weist vorzugsweise ein rohrförmiges Stutzenteil auf. Dieser erstreckt sich vorzugsweise nach unten vom Flansch weg und fasst die Aufnahmeöffnung des Stutzens ein. Das Stutzenteil weist bevorzugt mindestens einen Einkerbungsbereich auf, an dem das Stutzenteil elastisch ist. Vorzugsweise ist zumindest ein Rastvorsprung innerseitig am Einkerbungsbereichen ausgebildet.

Das Verbindungselement ist bevorzugt in einer Ansaugöffnung eines Gehäuses der Luftreinigungsvorrichtung höhenverschiebbar gelagert. Die Luftreinigungsvorrichtung umfasst erfindungsgemäß zumindest einen Adapter, wobei das Verbindungselement höhenverschiebbar im Adapter gelagert ist. Der Adapter ist vorzugsweise manschettenförmig ausgebildet, wobei das Verbindungselement zumindest teilweise im Adapter aufgenommen ist. Der Adapter umschließt dabei das Verbindungselement vollumfänglich.

Zum einfachen Einführen des Verbindungselements weist der Adapter vorzugsweise eine innere Anlagewand auf, die konisch zuläuft. Der Adapter weist vorzugsweise einen Anschlag für eine untere Stirnseite des Verbindungselements beziehungsweise dem zweiten Endabschnitt auf. Der Anschlag ist vorzugsweise als ein radial umlaufender Vorsprung an der inneren Anlagewand ausgebildet. Der Adapter weist vorzugsweise oberseitig einen Flansch auf, der sich radial vom Adapter wegerstreckt. Der Flansch kann einen Träger für einen Sicherungsschalter umfassen.

Die nicht erfindungsgemäße Kochstellenanordnung umfasst vorzugsweise zumindest einen Sicherheitsschalter, der in Wirkverbindung mit dem Verbindungselement und/oder der Luftreinigungsvorrichtung steht. Zur Sicherheit des Benutzers wird die Stromzufuhr durch den Sicherheitsschalter zur Kochstellenanordnung beziehungsweise zum Kochfeld und/oder zur Luftreinigungsvorrichtung unterbrochen, wenn das Verbindungselement und/oder die Luftreinigungsvorrichtung entnommen werden. Der Sicherheitsschalter umfasst vorzugsweise mindestens einen Taster. Der Taster berührt bevorzugt eine Außenfläche des Verbindungselements und/oder eine Außenfläche der Luftreinigungsvorrichtung, insbesondere des Gehäuses der Luftreinigungsvorrichtung. Wenn das Verbindungselement und/oder die Luftreinigungsvorrichtung entnommen werden, wird der Sicherheitsschalter durch den Taster aktiviert. Alternativ kann der Sicherheitsschalt statt eines mechanischen Tasters mindestens einen Sensor, beispielsweise einen Infrarotsensor aufweisen, der eine Entfernung oder ein Vorhandensein des Verbindungselementes oder der Luftreinigungsvorrichtung signalisiert. Der Sicherheitsschalter kann an dem Stutzen, dem Adapter und/oder an der Luftreinigungsvorrichtung angeordnet sein.

Gemäß eines unbeanspruchten Beispiels weist die Kochstellenanordnung ein Verbindungselement auf, das rundrohrförmig ausgebildet ist und eine radialumlaufende Mantelfläche beziehungsweise Außenfläche aufweist. Das Verbindungselement weist eine radialumlaufende Nut auf, die an einer Außenfläche ausgebildet ist. Die Nut ist zur Aufnahme von Rastvorsprüngen ausgebildet. Diese Nut unterteilt das Verbindungselement in einen ersten Endschnitt und in einen zweiten Endabschnitt. Im ersten Endabschnitt, im Bereich einer Einlassöffnung, weist die Außenfläche einen Rücksprung auf, der einen axialen Anschlag und eine radial Anlagefläche für ein Aufsatzelement, ausgebildet. Das Verbindungselement weist eine Auslassöffnung auf, die der Einlassöffnung gegenüberliegt. Die Einlassöffnung und die Auslassöffnung sind stirnseitig am Verbindungselement angeordnet. Das Verbindungselement weist ein Griffelement mit vier Doppelstegen auf, die sich in einer Mittelplatte vor der Einlassöffnung kreuzen. Die Doppelstege sind zueinander in einem rechten Winkel angeordnet. Zum Herausziehen des Verbindungselements führt der Benutzer Finger zwischen die Doppelstege ein und umgreift die Mittelplatte. Dann zieht er das Verbindungselement nach oben. Das Verbindungselement ist an einem Kochfeld mit einer mittigen Durchgangsöffnung durch einen Stutzen mechanisch lösbar befestigt. Der Stutzen ist als Rohraufnahme ausgebildet. Der Stutzen weist eine Aufnahmeöffnung, in der das Verbindungselement angeordnet ist. Die Aufnahmeöffnung ist deckungsgleich zur Durchgangsöffnung des Kochfeldes ausgebildet.

Der Stutzen weist in einer bevorzugten Ausführungsform vier Rastvorsprünge auf. Der Stutzen weist einen Flansch auf, an dem der Stutzen einer Unterseite des Kochfeldes befestigt ist. Der Flansch weist eine Verrippung auf. Der Flansch weist auch zwei Flügel auf, die sich gegenüberliegen. Unterseitig an den Flügeln ist mindesten eine Verstärkungsrippe ausgebildet. Der Stutzen weist ein rohrförmiges Stutzenteil auf. Dieser erstreckt sich nach unten vom Flansch weg und fasst die Aufnahmeöffnung ein. Das Stutzenteil weist vier Einkerbungsbereiche, wobei jeweils ein Rastvorsprung innerseitig an den Einkerbungsbereichen ausgebildet ist. Die Rastvorsprünge greifen in die umlaufende Nut des Verbindungselements ein. Der zweite Endabschnitt des Verbindungselements ist mittels eines Adapters höhenverschiebbar in der Ansaugöffnung einer Luftreinigungsvorrichtung gelagert. Der Adapter ist rohrförmig ausgebildet und weist eine innere Anlagewand für den zweiten Endabschnitt des Verbindungselements auf, die konisch zuläuft. Der Adapter weist einen radial umlaufend ausgebildeten Vorsprung als Anschlag auf, der an der inneren Anlagewand ausgebildet ist. Die Verschiebungshöhe des Verbindungselements wird durch die Längserstreckung der inneren Anlagewand bestimmt. Am Adapter ist oberseitig ein Flansch mit einem Träger ausgebildet, an dem ein Sicherungsschalter angeordnet ist. Der Flansch liegt auf einer Außenfläche der Luftreinigungsvorrichtung auf. Der Sicherungsschalter steht in Wirkverbindung mit der Au-ßenfläche des Verbindungselements, insbesondere über einen mechanischen Taster. Beim Herausziehen des Verbindungselements aus dem Adapter wird die Stromzufuhr zur Kochstellenanordnung unterbrochen.

Die erfindungsgemäße Verbindungsanordnung für eine Kochstellenanordnung umfasst mindestens ein Verbindungselement, mindestens einen Stutzen und mindestens einen Adapter, wobei das Verbindungselement mechanisch lösbar in dem Stutzen angeordnet und höhenverschiebbar in dem Adapter gelagert ist, wobei das Verbindungselement zumindest ein Griffelement zum Herausziehen des Verbindungselements durch einen Benutzer aufweist. Das Verbindungselement, der Stutzen und/oder der Adapter der erfindungsgemäßen Verbindungsanordnung können wie im Bezug auf die erfindungsgemäße Kochstellenanordnung beschrieben ausgebildet sein. Das Verbindungselement ist insbesondere bevorzugt vollständig durch den Stutzen durchführbar.

Das Verbindungselement weist erfindungsgemäß zumindest ein Griffelement zum Herausziehen des Verbindungselements durch einen Benutzer auf. Das Griffelement kann wie in Bezug auf die erfindungsgemäße Kochstellenanordnung vorstehend beschrieben ausgebildet sein.

Die Verbindungsanordnung weist besonders bevorzugt zumindest einen Sicherheitsschalter mit mindestens einer Wirkverbindung zu einer Außenfläche des Verbindungselements auf. Der Sicherheitsschalter kann wie in Bezug auf die erfindungsgemäße Kochstellenanordnung vorstehend beschrieben ausgebildet und angeordnet sein.

Der Stutzen und/oder der Adapter können eine Durchgangsöffnung zur Aufnahme des Verbindungselements aufweisen. Die Durchgangsöffnung ist vorzugsweise zumindest teilweise korrespondierend zu einer Mantelfläche beziehungsweise Außenfläche des Verbindungselements ausgebildet. Das Verbindungselement ist besonders bevorzugt rohrförmig ausgebildet. Der Stutzen und/oder der Adapter sind besonders bevorzugt zumindest teilweise ringförmig ausgebildet, um das Verbindungselement zumindest teilweise zu umschließen. Die Durchgangsöffnung des Stutzens und/oder des Adapters können eine kreisförmige, ovale oder rechteckige Kontur aufweisen. Auch andere, insbesondere vieleckige Konturen sind denkbar.

Eine bevorzugte Ausführungsform der Verbindungsanordnung ist gebildet aus der vorstehend beschriebenen Kochstellenanordnung, aber ohne Kochfeld und Luftreinigungsvorrichtung ausgebildet.

Das erfindungsgemäße Verbindungselement für eine Verbindungsanordnung weist bevorzugt zumindest ein Griffelement zum Herausziehen des Verbindungselements durch einen Benutzer auf. Das Verbindungselement kann wie im Bezug auf die erfindungsgemäße Kochstellenanordnung und Verbindungsanordnung beschrieben ausgebildet sein. Das Verbindungselement ist besonders bevorzugt rohrförmig ausgebildet. Das Verbindungselement weist besonders bevorzugt zumindest einen radialen Anschlag für ein rohrförmiges Aufsatzelement auf. Das Verbindungselement weist besonders bevorzugt zumindest eine radiale Anlagefläche zum Aufstecken eines rohrförmigen Aufsatzelements auf.

Das Verbindungselement umfasst besonders bevorzugt zumindest eine Nut für eine mechanisch lösbare Rastverbindung. Gemäß einer bevorzugten Ausführungsform ist das Verbindungselement rundrohrförmig ausgebildet und weist eine radialumlaufende Mantelfläche beziehungsweise Außenfläche auf. Das Verbindungselement weist eine radialumlaufende Nut auf, die an einer Außenfläche ausgebildet ist. Die Nut ist zur Aufnahme von Rastvorsprüngen ausgebildet. Diese Nut unterteilt das Verbindungselement in einen ersten Endschnitt und in einen zweiten Endabschnitt. Im ersten Endabschnitt, im Bereich einer Einlassöffnung, weist die Außenfläche einen Rücksprung auf, der einen axialen Anschlag und eine radialen Anlagefläche für ein Aufsatzelement, ausbildet. Das Verbindungselement weist eine Auslassöffnung auf, die der Einlassöffnung gegenüberliegt. Die Einlassöffnung und die Auslassöffnung sind stirnseitig am Verbindungselement angeordnet. Das Verbindungselement weist ein Griffelement mit vier Doppelstegen auf, die sich in der Mittelplatte vor der Einlassöffnung kreuzen. Die Doppelstege sind zueinander in einem rechten Winkel angeordnet. Zum Herausziehen des Verbindungselements führt der Benutzer Finger zwischen die Doppelstege ein und umgreift die Mittelplatte. Dann zieht er das Verbindungselement nach oben. Diese und weitere Vorteile der vorliegenden unbeanspruchten Beispiele und Erfindung werden anhand der nachfolgenden

Figuren näher erläutert. Es zeigen:
- Fig. 1:: eine Seitenansicht einer Kochstellenanordnung;
- Fig. 2:: eine Draufsicht auf die Kochstellenanordnung gemäß Fig. 1;
- Fig. 3:: eine Explosionsdarstellung der Kochstellenanordnung gemäß Fig. 1;
- Fig. 4:: eine teilweise Schnittansicht einer Luftreinigungsvorrichtung;
- Fig. 5:: eine Draufsicht auf ein erfindungsgemäßes Verbindungselement;
- Fig. 6:: eine Seitenansicht des Verbindungselements gemäß Fig. 5;
- Fig. 7:: eine Draufsicht auf einen Stutzen;
- Fig. 8:: eine perspektivische Ansicht des Stutzens gemäß Fig. 7;
- Fig.9:: eine Unteransicht des Stutzens gemäß Fig. 7;
- Fig.10:: eine Seitenansicht auf eine Anordnung eines Verbindungselements gemäß Fig. 5 in einer ersten Ausführungsform eines Adapters;
- Fig. 11:: eine Draufsicht auf eine alternative Ausführungsform eines Adapters;
- Fig. 12:: eine Seitenansicht des Adapters gemäß Fig. 11; und
- Fig. 13: ein Ausschnitt einer alternativen Ausführungsform der Kochstellenanordnung.

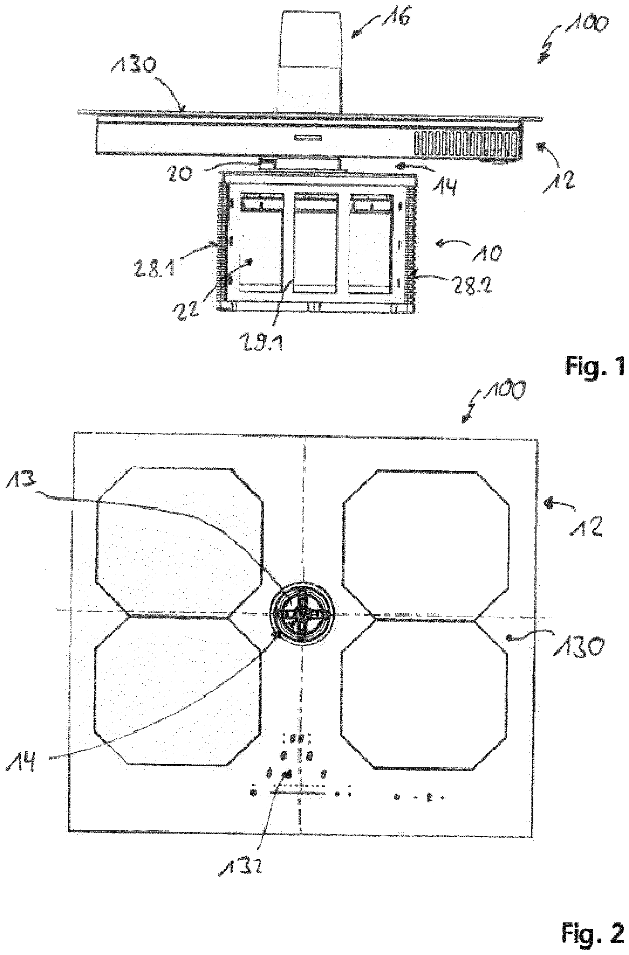

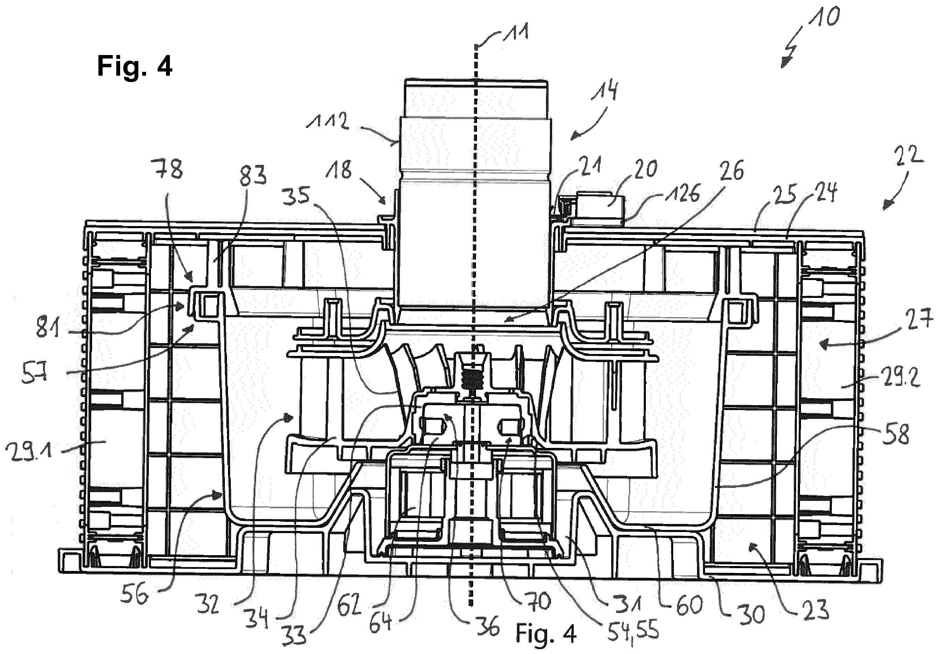

Fig. 1 zeigt eine Ansicht einer Kochstellenanordnung 100 von einem Querseitenteil 29.1 aus. Die Kochstellenanordnung 100 umfasst ein Kochfeld 12 mit einem Aufsatzelement 16 und eine unterhalb des Kochfeldes 12 angeordnete Luftreinigungsvorrichtung 10, die mit dem Kochfeld 12 über ein Verbindungselement 14 verbunden ist. Die Luftreinigungsvorrichtung 10 weist ein Gehäuse 22 auf, welches außer dem Querseitenteil 29.1 die Längsseitenteile 28.1 und 28.2 zeigt. Das gegenüberliegend dem Querseitenteil 29.1 liegende weitere Querseitenteil ist nicht gezeigt. Schließlich ist aus Fig. 1 auch eine mögliche Anordnung eines Sicherungsschalters 20, der beispielsweise mit dem Verbindungselement 14 oder aber mit einer Oberseite des Gehäuses 22 der Luftreinigungsvorrichtung 10 zusammenwirkt, gezeigt. Fig. 2 zeigt in einer Aufsicht die Kochstellenanordnung gemäß Fig. 1 mit dem Kochfeld 12 und der Kochfläche 130, welche die Oberseite des Kochfeldes 12 bildet. Mittig zentral zwischen vier nicht näher bezeichneten Kochstellen ist eine Durchgangsöffnung 13 in Form einer Bohrung im Kochfeld 12 ausgebildet, in welche das Verbindungselement 14 eingesetzt ist. Das Kochfeld 12 weist darüber hinaus ein Bediensegment 132 auf, über welches die nicht näher bezeichneten einzelnen Kochstellen als auch die Luftreinigungsvorrichtung 10 gesteuert werden können. Auch ist ein Griffelement 110 des Verbindungselementes 14 mit vier Doppelstegen mit Leerräumen zwischen diesen und einer zentralen Mittelplatte zu erkennen, mittels welchem das Verbindungselement 14 entlang einer Mittelachse 11, wie in Fig. 4 gezeigt, der Luftreinigungsvorrichtung 10 nach oben außerhalb des Kochfeldes 12 entnehmbar ist, insbesondere zur Reinigung der Luftreinigungsvorrichtung 10.

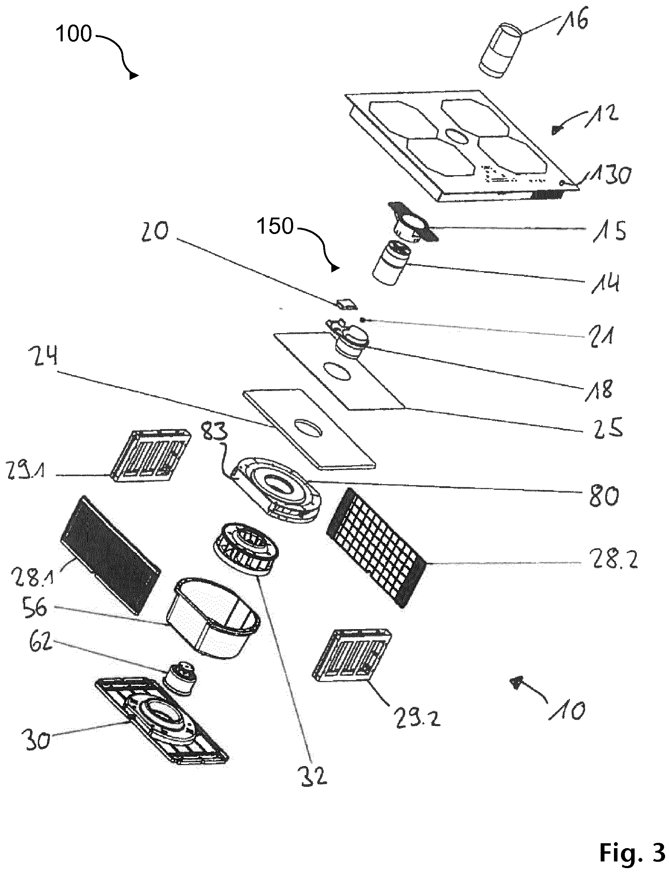

Fig. 3 zeigt in einer Explosionszeichnung die Kochstellenanordnung 100 gemäß Fig. 1. Zusätzlich zu Fig. 1 ist ein Stutzen 15 erkennbar, der am Kochfeld 12 unterhalb der Kochfläche 130 im Bereich der Durchgangsöffnung 13 des Kochfeldes 12 anordenbar ist. Dieser wirkt mit dem rohrförmigen Verbindungselement 14 zusammen. Weiterhin ist der Sicherungsschalter 20 als auch ein Taster 21 bei Ausbildung des Sicherungsschalters als mechanisch wirkender Schalter ersichtlich, welcher an einer hier nicht näher bezeichneten Trägeraufnahme eines Adapters 18 für das Verbindungselement 14 anordenbar ist. Der Taster 21 kann mit dem Verbindungselement 14 eine Wirkverbindung eingehen, oder aber mit einer Oberseite des Gehäuses 22 der Luftreinigungsvorrichtung 10, die durch eine alternativ vorhandene Abdeckplatte 25 oder ein Deckelteil 24, auch in Kombination, wie in Fig. 3 gezeigt, gebildet ist. Das Verbindungselement 14, der Stutzen 15 und der Adapter 18 sind mit rundem Querschnitt ausgebildet, entsprechend die Durchgangsöffnung 13 in dem Kochfeld 12 als auch eine Ansaugöffnung 26 (siehe Fig. 4) im Gehäuse 22 der Luftreinigungsvorrichtung 10. Es können aber auch andere Querschnitte verwendet werden, insbesondere dreieckige, viereckige, mehreckige oder polygonale Querschnitte oder aber auch ovale Querschnitte.

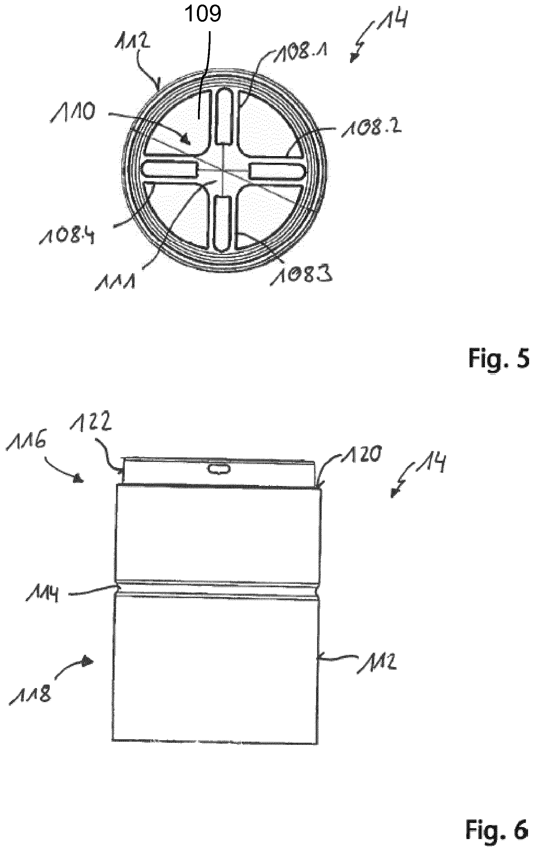

Das Gehäuse 22 der Luftreinigungsvorrichtung 10 wird, wie aus Fig. 3 ersichtlich, aus dem Deckelteil 24, den Längsseitenteilen 28.1 und 28.2, den Querseitenteilen 29.1 und 29.2 als auch einem Bodenteil 30 gebildet, die einen Innenraum 23 des Gehäuses 22 umschließen. Auf dem Bodenteil 30 angeordnet ist ein Motor 62 und eine Auffangwanne 56. Der Motor 62 greift zumindest mit einer hier nicht näher bezeichneten Motorwelle durch eine Öffnung in einem Boden der Auffangwanne 56 durch und in eine Aufnahmeausnehmung 36, die in Fig. 4 bis 6 gezeigt ist, eines Lüfterrades 32 hinein. Oberhalb des Lüfterrades 32 ist ein Abdeckelement 80, welches als Strömungsgleichrichter ausgebildet ist und ein Gleichrichteraufnahmeelement 83 aufweist, angeordnet. Das Gleichrichteraufnahmeelement 83 wirkt mit einem oberen Randbereich der Auffangwanne 56 derart zusammen, dass nach Entfernung des Deckelteiles 24, bevorzugt zusammen mit gegebenenfalls der vorhandenen Abdeckplatte 25, ein Benutzer das Abdeckelement zusammen mit der Abdeckwanne 56 und dem Lüfterrad 32 vom Bodenteil lösen kann. Hierzu ist bevorzugt zumindest eine Rastverbindungseinrichtung 70, die in Fig. 5 und 6 gezeigt ist, vorgesehen. Diese besteht zwischen einer Motorwelle 64 (siehe Fig. 4) des Motors 62 und der Aufnahmeausnehmung 36 des Lüfterrades 32. Zusätzlich können darüber hinaus auch noch Rastverbindungen beziehungsweise Zentrierungseinrichtungen zwischen einer Unterseite der Auffangwanne 56 und einer Oberseite des Bodenteiles 30 ausgebildet sein. Sämtliche Verbindungen zwischen Luftreinigungsvorrichtung 10, dem Adapter 18, dem Verbindungselement 14, dem Stutzen 15 als auch dem Aufsatzelement 16 sind als Steckverbindung ausgebildet und ermöglichen daher eine einfache Installation und Desinstallation der Luftreinigungsvorrichtung 10. Das Aufsatzelement kann auch radiale Öffnungen aufweisen, und bei einer solchen Ausgestaltung an seinem oberen, dem Kochfeld 12 entgegengesetzten Endbereich verschlossen ausgebildet sein. Der Stutzen 15, das Verbindungselement 14, und der Adapter 18 mit Sicherungsschalter 20 bilden zusammen eine Ausführungsform der erfindungsgemäßen Verbindungsanordnung 150.

Fig. 4 zeigt nun die Luftreinigungsvorrichtung 10 mit an dieser angeordnetem Verbindungselement 14 und Adapter 18 in einer Schnittansicht. Dabei ist der Strömungsgleichrichter 80 aus Darstellungsgründen weggelassen worden, jedoch das Gleichrichteraufnahmeelement 83 in der Fig. 4 belassen worden. Das Bodenteil 30 weist eine Motoraufnahme 31 auf, auf welcher beziehungsweise in welcher der Motor 62 mit der Motorwelle 64 aufgenommen ist. Eine nicht näher bezeichnete Elektronik mit Steuerung des Motors 62 ist bevorzugt ausgelagert und befindet sich außerhalb des Gehäuses 10, bevorzugt in einem von dem Gehäuse 10 der Luftreinigungsvorrichtung räumlich getrennten Steuerungsgehäuse. Die Motorwelle 64 ragt in eine Aufnahmeausnehmung 36 des Lüfterrades 32 hinein. Zwischen Aufnahmeausnehmung 36 des Lüfterrades und die Motorwelle 64 ist eine Rastverbindungseinrichtung 70 ausgebildet. Diese besteht beispielsweise aus mehreren, federnd gelagerten Kugeln, sogenannten Druckbällen, die auf der Motorwelle 64 angeordnet sind. Bevorzugt können dabei zwei, drei, vier oder mehr solcher Druckbälle dort angeordnet sein. Diese greifen in hier nicht näher bezeichnete Nuten auf einer Innenumfangsfläche 38 der Aufnahmeausnehmung 36 ein. Dabei sind bevorzugt die Nuten ausgebildet als eine einzige umlaufende Ringnut. Die Ringnut weist dabei bevorzugt unterschiedlich ausgebildete Flanken auf, wie in Fig. 6 gezeigt. Insbesondere ist die dem Motor 62 näher ausgebildete zweite Flanke der Nut radial beziehungsweise bogenförmig ausgebildet.

Das Lüfterrad 32 weist ein Innenteil 33 auf, welches beispielsweise aus Aluminiumguss gebildet ist. Darüber hinaus weist das Lüfterrad 32 ein Außenteil 34 auf, welches aus Kunststoff gebildet ist. Die Auffangwanne 56 weist einen Boden 60, auf welchem sich insbesondere Wasser und Öl im Betrieb der Luftreinigungsvorrichtung 10 sammeln, und eine Seitenwand 58 auf, welche auch als Abprallwand für einen radial durch das Lüfterrad 32 erzeugten Luftstrom dient. Durch die Seitenwand 58 wird letztendlich insbesondere der radiale Luftstrom, bevorzugt im Wesentlichen parallel zu einer Mittelachse 11 der Luftreinigungsvorrichtung 10, in Gegenrichtung zu der über die Ansaugöffnung 26 in der Oberseite des Gehäuses 22 einströmenden und angesaugten Luft umgeleitet, um dann über den Strömungsgleichrichter 80 in einen äußeren, als ringförmig anzusprechenden Bereich des Gehäuses 22 als gerichteter Transportstrom zu strömen und über eine Gehäuseausströmöffnung 27, die durch die Querseitenteile 29.1 und 29.2 zur Verfügung gestellt ist, das Gehäuse 22 der Luftreinigungsvorrichtung 10 zu verlassen. Dabei können in den Querseitenteilen 29.1 und 29.2 auch ergänzende Filter, insbesondere in Form von Filterkassetten, vorgesehen sein, insbesondere eingeschoben werden in entsprechende, nicht näher bezeichnete Aufnahmen. Diese hier nicht gezeigten Filterkassetten können beispielsweise Aktivkohle enthalten und dienen im Wesentlichen der vollständigen Reduzierung von Gerüchen, soweit diese nicht durch die Luftreinigungsvorrichtung 10 ohne Einsatz solcher Filterkassetten bereits beseitigt sind. Das Lüfterrad 32 weist mehrere Luftschaufeln 35 auf, die die durch die Ansaugöffnung 26 axial angesaugte Luft, insbesondere in Form von Kochwrasen, radial umlenken in Richtung der Seitenwand 58 der Auffangwanne 56. Die Ansaugöffnung nimmt den Adapter 18 und damit auch das Verbindungselement 14 auf.

Die Auffangwanne 56 weist einen oberen Randbereich 57 auf, der zusammen mit einem Au-ßenrandbereich 81 des Gleichrichteraufnahmeelementes 83 wirkt und ein Griffelement 78 für einen Benutzer bildet, so dass dieser nach Entfernung des Deckelteils 24 als auch der alternativ hier zusätzlich vorgesehenen Abdeckplatte 25 die Abdeckwanne 26 zusammen mit dem Lüfterrad 32 und dem Strömungsgleichrichter 80 samt Gleichrichteraufnahmeelement 83 aus dem Gehäuse 22 der Luftreinigungsvorrichtung 10 entnehmen kann.

In der Ausführungsform der Luftreinigungsvorrichtung 10 gemäß Fig. 4 zusammen mit dem Verbindungselement 14 und dem Adapter 18 für das Verbindungselement 14 ist das Zusammenwirken des Sicherungsschalters 20 über einen Taster 21 des Sicherungsschalters 20 mit einer Außenfläche 112 des Verbindungselementes 14 zu erkennen. Soll zum Zwecke der Reinigung die beispielsweise in einer Auszugsschublade unterhalb eines Kochfeldes 12 in einem Küchenmöbel angeordnete Luftreinigungsvorrichtung 10 gereinigt werden, wird zunächst durch die in Fig. 1 und 2 gezeigte Durchgangsöffnung 13 das Verbindungselement 14 mittels des dortigen Griffelementes 110 nach oben entnommen. Dabei verliert der Taster 21 des Sicherungsschalters 20 den Kontakt zur Außenfläche 112 des Verbindungselementes 14 und schaltet die Luftreinigungsvorrichtung 10 sicher ab. Alternativ kann auch vorgesehen sein, dass beispielsweise der Taster 21 mit einer Oberseite des Gehäuses 22, beispielsweise der hier vorgesehenen alternativen Abdeckplatte 25 oder aber nur einem Deckelteil 24 zusammenwirkt, wobei dann der Sicherungsschalter 20 nicht auf der Oberseite des Gehäuses 22 der Luftreinigungsvorrichtung 10 oder aber am Adapter 18, wie in Fig. 4 gezeigt, angeordnet ist, sondern vielmehr am Kochfeld 12, beispielsweise am Stutzen 15 gemäß Fig. 3. In der in Fig. 4 gezeigten Ausführungsform ist der Sicherungsschalter 20 auf einem Träger 126 des Adapters 18 angeordnet. Dieser Träger 126 kann als seitliche Erweiterung eines Flansches des Adapters 18 ausgebildet sein. Anschließend kann das Lüfterrad 32 zusammen mit der Auffangwanne 56 und dem als Strömungsgleichrichter ausgebildeten Abdeckelement 80 entnommen werden. Das Einsetzen des Lüfterrades 32 und Anordnen auf der Motorwelle 64 wird durch eine an eine an einem Öffnungsrandbereich 54 der Aufnahmeausnehmung 36 ausgebildeten Fase 55 erleichtert. Die Positionierung der Auffangwanne 56 kann durch nicht näher bezeichnete Positionsmittel auf dem Bodenteil 30 erleichtert sein.

Das Verbindungselement 14 ist gleitend im Adapter 18 über seine Außenfläche 112 gelagert, so dass hierdurch ein Höhenausgleich erfolgen kann. Denn je nach Einbausituation und Ma-ßen der in der Regel als Einbauschränke ausgebildeten Küchenmöbel, in welche die erfindungsgemäße Kochstellenanordnung 100 beziehungsweise Luftreinigungsvorrichtung 10 angeordnet werden, ist der Abstand zwischen der Kochfläche 130 des Kochfeldes 12 und einer Oberseite des Gehäuses 22 der Luftreinigungsvorrichtung 10 unterschiedlich. Beispielsweise kann durch das Verbindungselement 14 ein Höhenausgleich von etwa 40 mm erfolgen, der in etwa in einem Bereich zwischen dem Flansch des Adapters 18 und einem unteren Rand, zugewandt dem Lüfterrad 32, des Verbindungselementes 14 definiert ist. Das Verbindungselement 14 selbst ist am Kochfeld 12 der Kochstellenanordnung 100 fest, aber mechanisch lösbar gehalten, beispielsweise über eine Rastverbindung, die durch den Adapter 15 in Zusammenwirkung mit dem Verbindungselement 14 zur Verfügung gestellt ist. Hingegen ist das Verbindungselement 14 gleitend im Adapter 18 angeordnet. Das Verbindungselement 14 beziehungsweise der Adapter 15 können dabei in ihrem dem Kochfeld 12 zugewandten Endbereich eine Aufnahme für das Aufsatzelement 16 zur Verfügung stellen. Dieses kann somit einfach vom Benutzer abgenommen werden, so dass Töpfe und sonstiges Kochgeschirr auf der Kochfläche 130 einfach verschoben werden können. Das Aufsatzelement 16 dient dazu, Luft, insbesondere in Form von Kochwrasen, auf Höhe von Töpfen und nahe dem Öffnungsrand derselben abzusaugen. Es können dem Benutzer auch Aufsatzelemente 16 unterschiedlicher Höhe hierzu zur Verfügung gestellt werden. Das Verbindungselement 14 schließt mit seinem oberen Endbereich bündig mit der Kochfläche 130 des Kochfeldes 12 ab, um ein Verschieben von Kochgeschirr nicht zu behindern. Zur Entnahme weist das Verbindungselement 14 mittig angeordnet ein Griffelement 110 gemäß Fig. 2 auf. Dieses Griffelement 110 kann auch derart ausgebildet sein, dass es ein Fallen von Partikeln oder Schmutz oder Kochresten in die Luftreinigungsvorrichtung 10 verhindert, wozu es beispielsweise auch netzartig ausgebildet sein kann. Im Übrigen kann es auch als Werbeträger dienen und auch Mittel aufweisen, welche das Ansauggeräusch bei Betrieb der Kochstellenanordnung 100 beziehungsweise der Luftreinigungsvorrichtung 10 vermindern, was durch spezifische Ausbildung der Kanten und Anordnung von Stegen im Griffelement 110 des Verbindungselementes 14 erfolgen kann.

Fig. 5 zeigt, dass das Griffelement 110 des Verbindungselements 14 vier Doppelstege 108.1. 108.2, 108.3 und 108.4 aufweist, die sich in der Mittelplatte 111 vor einer Einlassöffnung 109 kreuzen. Die Doppelstege 108.1. 108.2, 108.3 und 108.4 sind zueinander in einem rechten Winkel angeordnet. Die Mittelplatte 111 kann als Träger für Werbung dienen. Zum Herausziehen des Verbindungselements 14 führt der Benutzer Finger zwischen die Doppelstege 108.1. 108.2, 108.3 und 108.4 ein und umgreift die Mittelplatte 111. Dann zieht er das Verbindungselement 14 nach oben. Das Verbindungselement 14 ist rundrohrförmig ausgebildet und weist eine radialumlaufende Mantelfläche beziehungsweise Außenfläche 112 auf.

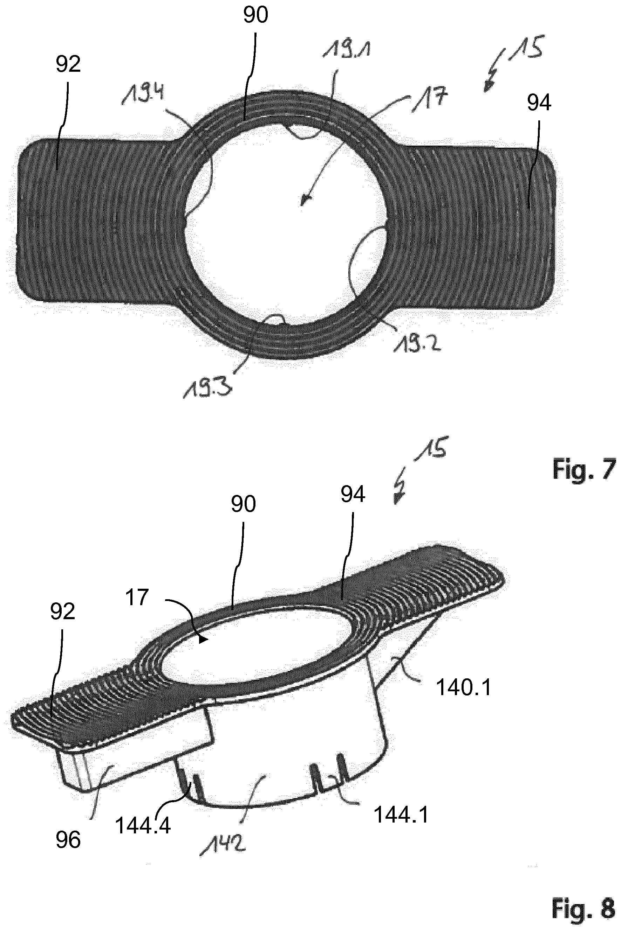

Fig. 6 zeigt, dass das Verbindungselement 14 eine radial umlaufende Nut 114 umfasst, die an der Außenfläche 112 ausgebildet ist. Die Nut 114 ist zur Aufnahme von Rastvorsprüngen 19.1, 19.2, 19.3 und 19. 4 des in Fig. 7 gezeigten Stutzens 15 ausgebildet. Die Nut 114 unterteilt das Verbindungselement 14 in einen ersten Endschnitt 116 und in einen zweiten Endabschnitt 118. Im ersten Endabschnitt 116 im Bereich der Einlassöffnung 109 weist die Außenfläche einen Rücksprung auf, der einen axialen Anschlag 120 und eine radiale Anlagefläche 122 für das in Fig. 1 und Fig. 3 gezeigte Aufsatzelement 16 ausbildet. Das Verbindungselement weist eine nicht dargestellte Auslassöffnung auf, die der in Fig. 5 gezeigten Einlassöffnung 109 gegenüberliegt. Die Einlassöffnung 109 und die Auslassöffnung sind stirnseitig am Verbindungselement angeordnet.

Fig. 7 zeigt, dass der Stutzen 15 eine Aufnahmeöffnung 17 für das Verbindungselement 14 aufweist. Der Innendurchmesser der Aufnahmeöffnung 17 und der Außendurchmesser der Außenfläche 112 sind im Wesentlichen gleich ausgebildet. Das Verbindungselement 14 kann in der Aufnahmeöffnung 15 angeordnet werden. Zur Demontage kann das Verbindungselement 14 vollständig aus dem Stutzen 15 herausgezogen werden. Beim Einführen in eine Einsteckrichtung verrasten die vier Rastvorsprünge 19.1, 19.2, 19.3 und 19.4, die in der Aufnahmeöffnung 17 angeordnet sind, in der Nut 114 des Verbindungselements 14. Derart ist das Verbindungselement 14 mechanisch lösbar am Kochfeld 12 angeordnet. In der in Fig. 1 gezeigten Einbaulage ist der Stutzen 15 unterseitig einer Oberfläche des Kochfeldes 12 befestigt, so dass die Durchgangsöffnung 13 des Kochfeldes und die Aufnahmeöffnung 17 des Stutzens 15 deckungsgleich sind. Zur Demontage kann das Verbindungselement 14 auch vollständig aus der Durchgangsöffnung 13 herausgezogen werden. Der Stutzen 15 weist oberseitig einen verrippten Flansch 90 mit einem ersten Flügel 92 und einem zweiten Flügel 94 zur Befestigung am Kochfeld 12 auf.

Fig. 8 zeigt unterseitig am ersten Flügel 92 einen Träger 96 für einen Sicherheitsschalter 20 und unterseitig am zweiten Flügel 94 eine Verstärkungsrippe 140.1. Der Stutzen 15 weist ein rohrförmiges Stutzenteil 142 auf, das sich nach unten vom Flansch 90 wegerstreckt und die Aufnahmeöffnung 17 einfasst. Das Stutzenteil 142 weist Einkerbungsbereiche 144 auf. Bei den Einkerbungsbereichen 144 ist das Stutzenteil 142 elastisch. Die Rastvorsprünge 19.1, 19.2, 19.3 und 19.4 sind innerseitig an den Einkerbungsbereichen 144 ausgebildet.

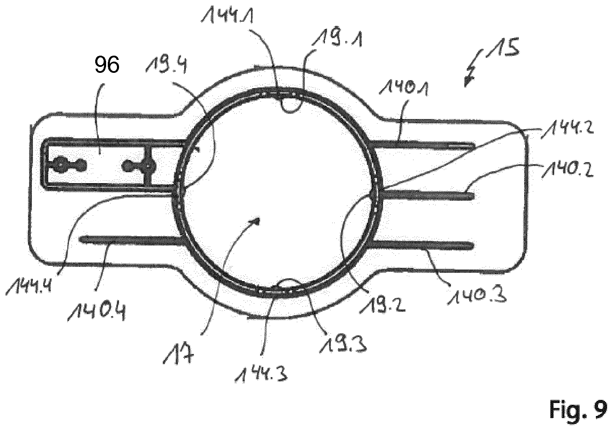

Fig. 9 zeigt, dass unterseitig am ersten Flügel 92 auch eine Verstärkungsrippe 140.4 ausgebildet ist. Unterseitig am zweiten Flügel 94 ist neben der Verstärkungsrippe 140.3 noch die Verstärkungsrippen 140.2 und 140.1 ausgebildet. Fig. 9 zeigt auch, dass der Stutzen 15 vier Einkerbungsbereiche 144.1, 144.2, 144.3 und 144.4 mit jeweils einem Rastvorsprung 19.1, 19.2, 19.3 und 19.4 aufweist.

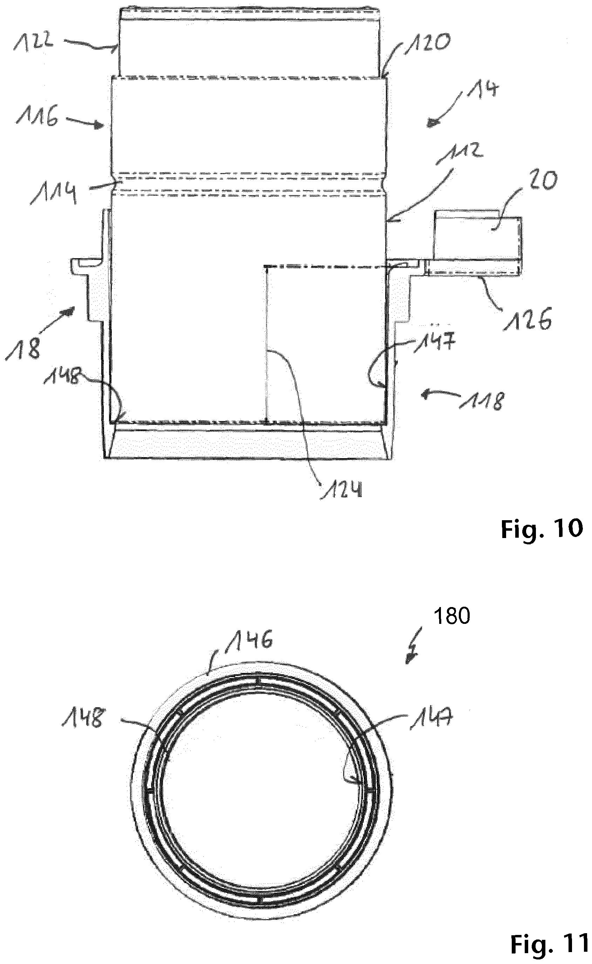

In Fig. 10 ist das vorbeschriebene Verbindungselement 14 mit einer durch den Doppelpfeil verdeutlichten Verschiebungshöhe 124 gleitend in dem in Fig. 3 und Fig. 4 gezeigten Adapter 18 angeordnet. Zum einfachen Einführen des Verbindungselements weist der Adapter 18 eine innere Anlagewand 147 auf, die konisch zuläuft. In Einbaulage ist der Endabschnitt 118 auf einem als radial umlaufenden Vorsprung 148 ausgebildeten Anschlag des Adapters 18 angeordnet. Die Verschiebungshöhe 124 wird durch eine Längserstreckung der inneren Anlagewand 147 bestimmt. Am Adapter 18 ist oberseitig ein Träger 126 ausgebildet, an dem ein Sicherungsschalter 20 angeordnet ist. Der Träger 126 ist radial außenseitig am Adapter 18 ausgebildet.

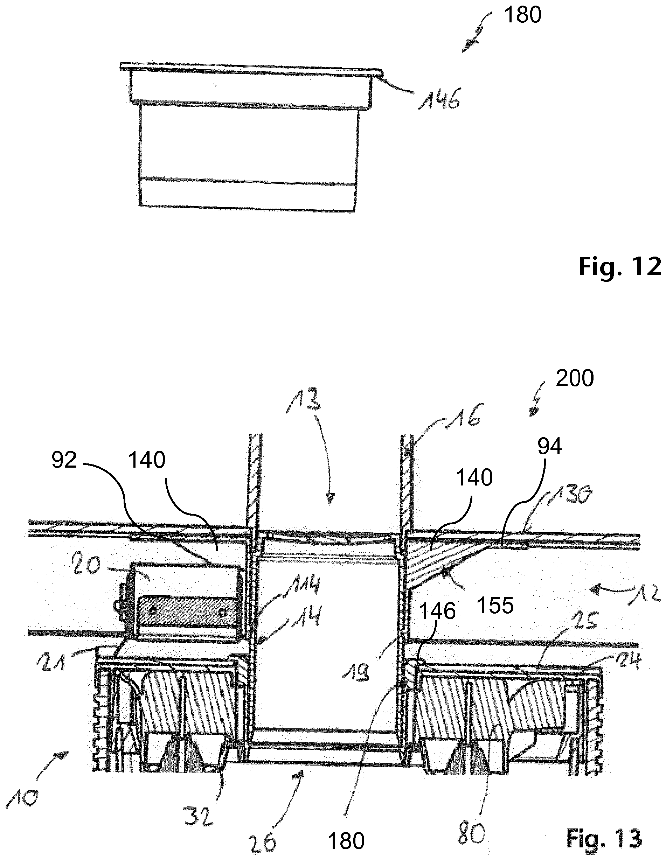

Fig. 11 und Fig. 12 zeigen, dass sich eine zweite Ausführungsform des Adapters 180 dadurch vom Adapter 18 unterscheidet, dass dieser keinen Träger 126 für einen Sicherungsschalter aufweist. Der Adapter 180 weist hingegen einen einfachen Flansch 146 auf. Der Adapter 180 weist aber auch eine innere Anlagewand 147, die konisch zuläuft, und einem als radial umlaufenden Vorsprung 148 ausgebildeten Anschlag auf.

Fig. 13 zeigt, dass sich eine alternative Ausführung der Kochstellenanordnung 200 dadurch von der ersten Ausführungsform der Kochstellenanordnung 10 unterscheidet, dass anstelle des Adapters 18 der Adapter 180 verwendet wird. Auch die Anordnung des Sicherungsschalters 20 ist anders. Dieser weist einen Taster 21 auf, der in Wirkverbindung mit der Abdeckplatte 25 der Luftreinigungsvorrichtung 10 steht. Bei Entnahme der Luftreinigungsvorrichtung 10 wird die Stromzufuhr zur Kochstellenanordnung 200 unterbrochen. Die Kochstellenanordnung 200 weist auch einen abgewandelten Stutzen 155 anstelle des Stutzens 15 auf. Der Stutzen 155 weist keinen Träger für den Sicherungsschalter 20 auf. Unterseitig an den Flügeln 92, 94 sind lediglich Verstärkungsrippen 140 ausgebildet. Ansonsten gleicht der Stutzen 155 dem Stutzen 15.

Fig. 13 zeigt auch, dass der Adapter 180 in der Ansaugöffnung 26 der Luftreinigungseinrichtung 10 angeordnet ist. Die Luftreinigungsvorrichtung 10 ist wie vorbeschreiben ausgebildet und weist insbesondere ein Lüfterrad 32 und ein Abdeckelement 80 auf. Der Flansch 146 des Adapters 180 liegt auf der Abdeckplatte 25 des Deckelteils 22 auf. Der Stutzen 155 ist unterseitig am Kochfeld 12 befestigt. In der Durchgangsöffnung 13 des Kochfeldes 12 und der Ansaugöffnung 26 ist das Verbindungselement 14 angeordnet. Durch den Stutzen 155 ist das Verbindungselement 14 wie zur Kochstellenanordnung 100 beschrieben mechanisch lösbar am Kochfeld 12 befestigt. Die Rastvorsprünge 19 des Stutzens 155 greifen in die in Fig. 10 gezeigte Nut 114 des Verbindungselements 14 ein. Durch den Adapter 180 ist das Verbindungselement 14 höhenverschiebbar in der Luftreinigungseinrichtung 10 angeordnet. Die Luftreinigungsvorrichtung 10 ist unterhalb der Kochfläche 130 des Kochfeldes 12 angeordnet. Ein Aufsatzelement 16 ist auf dem Verbindungselement 14 angeordnet.

Mit der vorliegenden Erfindung wird eine verbesserte Verbindungsanordnung zur Verfügung gestellt, die besonders einfach eingebaut und ausgebaut werden kann. Insbesondere auch zur Reinigung kann eine einfache und schnelle Demontage des Verbindungselements und/oder der Luftreinigungsanordnung der Kochstellenanordnung erfolgen.

## Patentansprüche

1. Verbindungsanordnung (150) für eine Kochstellenanordnung (100, 200) mit einem Kochfeld (12) und mindestens einer unterhalb des Kochfeldes (12) angeordneten Luftreinigungsvorrichtung (10), wobei die Verbindungsanordnung (150) mindestens ein Verbindungselement (14), mindestens einen Stutzen (15, 155) und mindestens einen Adapter (18, 180) umfasst, wobei das Verbindungselement (14) höhenverschiebbar im Adapter (18, 180) gelagert ist und mechanisch lösbar in dem Stutzen (15, 155) angeordnet ist, bei mittels des Verbindungselementes (14) das Kochfeld (12) mit der Luftreinigungsvorrichtung (10) derart verbindbar ist, dass Luft vom Kochfeld (12) über das Verbindungselement (14) zur Luftreinigungsvorrichtung (10) leitbar ist, wobei das Verbindungselement (14) zumindest ein Griffelement (110) zum Herausziehen des Verbindungselements (14) durch einen Benutzer aufweist, **dadurch gekennzeichnet, dass**
das Verbindungselement (14) einen ersten, in Einsteckrichtung des Verbindungselementes (14) vorderen Endabschnitt (116) aufweist, dessen diesem zugeordnete Stirnseite an die Oberfläche des Kochfeldes (12) angrenzbar und der in einer Durchgangsöffnung (13) des Kochfeldes (12) mechanisch lösbar anordenbar ist,und wobei das Verbindungselement (14) einen zweiten, in Einsteckrichtung des Verbindungselementes (14) hinteren Endabschnitt (118) aufweist, der höhenverschiebbar in der Luftreinigungsvorrichtung (10) lagerbar ist.

2. Verbindungsanordnung (150) gemäß Anspruch 1, **dadurch gekennzeichnet, dass** das Verbindungselement (14) vollständig durch den Stutzen (15, 155) durchführbar ist.

3. Verbindungsanordnung (150) gemäß einem oder mehreren der vorhergehenden Ansprüche **dadurch gekennzeichnet, dass** diese zumindest einen Sicherheitsschalter (20) mit mindestens einer Wirkverbindung zu einer Außenfläche (112) des Verbindungselements (14) umfasst.

4. Verbindungsanordnung (150) gemäß einem oder mehreren der vorhergehenden Ansprüche, **dadurch gekennzeichnet, dass** das Verbindungselement (14) rohrförmig und der Stutzen (15, 155) und/oder der Adapter (18, 180) zumindest teilweise ringförmig ausgebildet sind.

5. Verbindungsanordnung (150) gemäß einem oder mehreren der vorhergehenden Ansprüche mit einem Kochfeld (12) und mindestens einer unterhalb des Kochfeldes (12) angeordneten Luftreinigungsvorrichtung (10) zur Bildung einer Kochstellenanordnung (100, 200), **dadurch gekennzeichnet, dass** mittels dem zumindest einen Verbindungselement (14) das Kochfeld (12) mit der Luftreinigungsvorrichtung (10) derart verbindbar ist, dass Luft vom Kochfeld (12) über das Verbindungselement (14) zur Luftreinigungsvorrichtung (10) leitbar ist, wobei die Luftreinigungsvorrichtung (10) den mindestens einen Adapter (18, 180) umfasst, wobei das Verbindungselement (14) mechanisch lösbar an dem Kochfeld (12) angeordnet und höhenverstellbar in der Luftreinigungsvorrichtung (10) gelagert ist.

6. Verbindungsanordnung (150) gemäß Anspruch 5, **dadurch gekennzeichnet, dass** das Kochfeld mindestens eine Durchgangsöffnung (1 3) aufweist und dass das Verbindungselement (14) mechanisch lösbar in der Durchgangsöffnung (13) angeordnet ist.

7. Verbindungsanordnung (150) gemäß Anspruch 6, **dadurch gekennzeichnet, dass** das Verbindungselement (14) vollständig durch die Durchgangsöffnung (13) durchführbar ist.

8. Verbindungsanordnung (150) gemäß einem oder mehreren der Ansprüche 5 bis 7, **dadurch gekennzeichnet, dass** diese zumindest einen Sicherheitsschalter (20) umfasst, der in Wirkverbindung mit dem Verbindungselement (14) und/oder der Luftreinigungsvorrichtung (10) steht.

9. Verbindungsanordnung (150) gemäß Anspruch 8, **dadurch gekennzeichnet, dass** der zumindest einen Sicherheitsschalter (20) mindestens einem Taster (21) umfasst, wobei der Taster (21) eine Außenfläche (112) des Verbindungselements (14) und/oder eine Außenfläche der Luftreinigungsvorrichtung (10) berührt.

10. Verbindungsanordnung (150) gemäß einem oder mehreren der Ansprüche 5 bis 9, **dadurch gekennzeichnet, dass** das Verbindungselement (14) zumindest eine Nut (114) für eine mechanisch lösbare Anordnung am Kochfeld (12) aufweist.

11. Verbindungsanordnung (150) gemäß einem oder mehreren der Ansprüche 5 bis 10, **dadurch gekennzeichnet, dass** das Verbindungselement (14) rohrförmig ausgebildet ist und einen ersten Endabschnitt (116), der am Kochfeld (12) oder in der Durchgangsöffnung (13) mechanisch lösbar angeordnet ist, und einen zweiten Endabschnitt (118) aufweist, der höhenverschiebbar in der Luftreinigungsvorrichtung (10) gelagert ist.

12. Verbindungsanordnung (150) gemäß einem oder mehreren der Ansprüche 5 bis 11, **dadurch gekennzeichnet, dass** der Stutzen (15, 155) zumindest einen Rastvorsprung (19) aufweist.

13. Verbindungsanordnung (150) gemäß einem oder mehreren der Ansprüche 5 bis 12, **dadurch gekennzeichnet, dass** der Adapter (18, 180) manschettenförmig ausgebildet ist und das Verbindungselement (14) zumindest teilweise im Adapter (18, 180) aufgenommen ist.

14. Verbindungsanordnung (150) gemäß einem oder mehreren der vorhergehenden Ansprüche, **dadurch gekennzeichnet, dass** das Verbindungselement (14) rohrförmig ausgebildet ist.

15. Verbindungsanordnung (150) gemäß einem oder mehreren der vorhergehenden Ansprüche, **dadurch gekennzeichnet, dass** das Verbindungselement (14) zumindest einen radialen Anschlag (120) für ein rohrförmiges Aufsatzelement (16) aufweist.

16. Verbindungsanordnung (150) gemäß einem oder mehreren der vorhergehenden Ansprüche, **dadurch gekennzeichnet, dass** das Verbindungselement (14) zumindest eine radiale Anlagefläche (122) zum Aufstecken eines rohrförmigen Aufsatzelements (16) aufweist.

17. Verbindungsanordnung (150) gemäß einem oder mehreren der vorhergehenden Ansprüche, **dadurch gekennzeichnet, dass** das Verbindungselement (14) zumindest eine Nut (114) für eine mechanisch lösbare Rastverbindung umfasst.

## Claims

1. Connecting arrangement (150) for a cooking zone arrangement (100, 200) with a cooking hob (12) and at least one air cleaning device (10) arranged below the cooking hob (12), wherein the connecting arrangement (150) comprises at least one connecting element (14), at least one connecting piece (15, 155) and at least one adapter (18, 180), wherein the connecting element (14) is mounted in the adapter (18, 180) so as to be vertically displaceable and is arranged in the connecting piece (15, 155) so as to be mechanically releasable, wherein the cooking hob (12) can be connected to the air cleaning device (10) by means of the connecting element (14) in such a way that air can be conducted from the cooking hob (12) via the connecting element (14) to the air cleaning device (10), wherein the connecting element (14) has at least one handle element (110) for pulling out the connecting element (14) by a user, **characterized in that** the connecting element (14) has a first end section (116) which is at the front in the insertion direction of the connecting element (14) and whose end face assigned to the latter can adjoin the surface of the cooking hob (12) and which can be arranged in a through-opening (13) of the cooking hob (12) in a mechanically releasable manner, and wherein the connecting element (14) has a second end section (118) which is at the rear in the insertion direction of the connecting element (14) and which can be mounted in the air cleaning device (10) in a vertically displaceable manner.

2. Connecting arrangement (150) according to claim 1, **characterized in that** the connecting element (14) can be passed completely through the connecting piece (15, 155).

3. Connecting arrangement (150) according to one or more of the preceding claims, **characterized in that** it comprises at least one safety switch (20) with at least one operative connection to an outer surface (112) of the connecting element (14).

4. Connecting arrangement (150) according to one or more of the preceding claims, **characterized in that** the connecting element (14) is tubular and the connecting piece (15, 155) and/or the adapter (18, 180) are at least partially annular.

5. Connecting arrangement (150) according to one or more of the preceding claims, having a cooking hob (12) and at least one air cleaning device (10) arranged below the cooking hob (12) for forming a cooking point arrangement (100, 200), **characterized in that** the cooking hob (12) can be connected to the air cleaning device (10) by means of the at least one connecting element (14) in such a way that air can be conducted from the cooking hob (12) via the connecting element (14) to the air cleaning device (10), the air cleaning device (10) comprising the at least one adapter (18, 180), wherein the connecting element (14) is arranged mechanically detachably on the cooking hob (12) and is mounted in the air cleaning device (10) in a vertically displaceable manner.

6. Connecting arrangement (150) according to claim 5, **characterized in that** the cooking hob has at least one through-opening (13) and **in that** the connecting element (14) is arranged in the through-opening (13) in a mechanically releasable manner.

7. Connecting arrangement (150) according to claim 6, **characterized in that** the connecting element (14) can be passed completely through the through-opening (1 3).

8. Connecting arrangement (150) according to one or more of claims 5 to 7, **characterized in that** it comprises at least one safety switch (20) which is operatively connected to the connecting element (14) and/or the air cleaning device (10).

9. Connecting arrangement (150) according to claim 8, **characterized in that** the at least one safety switch (20) comprises at least one button (21), wherein the button (21) contacts an outer surface (112) of the connecting element (14) and/or an outer surface of the air cleaning device (10).

10. Connecting arrangement (150) according to one or more of claims 5 to 9, **characterized in that** the connecting element (14) comprises at least one groove (114) for a mechanically releasable arrangement on the cooking hob (12).

11. Connecting arrangement (150) according to one or more of claims 5 to 10, **characterized in that** the connecting element (14) is tubular and has a first end section (116), which is arranged on the cooking hob (12) or in the through-opening (13) in a mechanically releasable manner, and a second end section (118), which is mounted in the air cleaning device (10) in a vertically displaceable manner.

12. Connecting arrangement (150) according to one or more of claims 5 to 11, **characterized in that** the connecting piece (15, 155) has at least one latching projection (19).

13. Connecting arrangement (150) according to one or more of claims 5 to 12, **characterized in that** the adapter (18, 180) is sleeve-shaped and the connecting element (14) is at least partially accommodated in the adapter (18, 180).

14. Connecting arrangement (150) according to one or more of the preceding claims, **characterized in that** the connecting element (14) is tubular.

15. Connecting arrangement (150) according to one or more of the preceding claims, **characterized in that** the connecting element (14) has at least one radial stop (120) for a tubular attachment element (16).

16. Connecting arrangement (150) according to one or more of the preceding claims, **characterized in that** the connecting element (14) has at least one radial contact surface (122) for plugging on a tubular attachment element (16).

17. Connecting arrangement (150) according to one or more of the preceding claims, **characterized in that** the connecting element (14) comprises at least one groove (114) for a mechanically releasable latching connection.

## Revendications

1. Agencement de liaison (150) pour un agencement (100, 200) de plaques de cuisson avec une plaque de cuisson (12) et au moins un dispositif de purification d'air (10) disposé sous la plaque de cuisson (12), l'agencement de liaison (150) comprenant au moins un élément de liaison (14), au moins une pièce de raccordement (15, 155) et au moins un adaptateur (18, 180), l'élément de liaison (14) étant logé de manière déplaçable en hauteur dans l'adaptateur (18, 180) et étant disposé de manière mécaniquement amovible dans la pièce de raccordement (15, 155), la plaque de cuisson (12) étant reliable au dispositif de purification d'air (10) au moyen de l'élément de liaison (14) de telle sorte que l'air est guidable de la plaque de cuisson (12) au dispositif de purification d'air (10) par l'intermédiaire de l'élément de liaison (14), l'élément de liaison (14) présentant au moins un élément de poignée (110) pour l'extraction de l'élément de liaison (14) par un utilisateur, **caractérisé en ce que** l'élément de liaison (14) présente une première section d'extrémité (116) avant dans le sens d'insertion de l'élément de liaison (14), dont la face frontale associée à celle-ci est jouxtable à la surface de la plaque de cuisson (12) et qui est disposable de manière mécaniquement amovible dans une ouverture de passage (13) de la plaque de cuisson (12), et l'élément de liaison (14) présente une deuxième section d'extrémité (118) arrière dans le sens d'insertion de l'élément de liaison (14), qui est logeable de manière déplaçable en hauteur dans le dispositif de purification d'air (10).

2. Agencement de liaison (150) selon la revendication 1, **caractérisé en ce que** l'élément de liaison (14) est entièrement traversable par la pièce de raccordement (15, 155).

3. Agencement de liaison (150) selon une ou plusieurs des revendications précédentes, **caractérisé en ce qu'**il comprend au moins un interrupteur de sécurité (20) avec au moins une liaison active à une surface extérieure (112) de l'élément de liaison (14).

4. Agencement de liaison (150) selon une ou plusieurs des revendications précédentes, **caractérisé en ce que** l'élément de liaison (14) est formé de forme tubulaire et la pièce de raccordement (15, 155) et/ou l'adaptateur (18, 180) sont formés au moins partiellement de forme annulaire.

5. Agencement de liaison (150) selon une ou plusieurs des revendications précédentes avec une plaque de cuisson (12) et au moins un dispositif de purification d'air (10) disposé sous la plaque de cuisson (12) pour former un agencement (100, 200) de plaques de cuisson, **caractérisé en ce que** la plaque de cuisson (12) est reliable au dispositif de purification d'air (10) au moyen d'au moins un élément de liaison (14) de telle manière, que l'air est guidable de la plaque de cuisson (12) au dispositif de purification d'air (10) par l'intermédiaire de l'élément de liaison (14), le dispositif de purification d'air (10) comprenant l'au moins un adaptateur (18, 180), l'élément de liaison (14) étant disposé de manière mécaniquement amovible sur la plaque de cuisson (12) et étant logé de manière déplaçable en hauteur dans le dispositif de purification d'air (10).

6. Agencement de liaison (150) selon la revendication 5, **caractérisé en ce que** la plaque de cuisson présente au moins une ouverture de passage (13) et **en ce que** l'élément de liaison (14) est disposé de manière mécaniquement amovible dans l'ouverture de passage (13).

7. Agencement de liaison (150) selon la revendication 6, **caractérisé en ce que** l'élément de liaison (14) est entièrement traversable par l'ouverture de passage (13).

8. Agencement de liaison (150) selon une ou plusieurs des revendications 5 à 7, **caractérisé en ce qu'**il comprend au moins un interrupteur de sécurité (20) en liaison active avec l'élément de liaison (14) et/ou le dispositif de purification d'air (10).

9. Agencement de liaison (150) selon la revendication 8, **caractérisé en ce que** le au moins un interrupteur de sécurité (20) comprend au moins un bouton-poussoir (21), le bouton-poussoir (21) étant en contact avec une surface extérieure (112) de l'élément de liaison (14) et/ou une surface extérieure du dispositif de purification d'air (10).

10. Agencementde liaison (150) selon une ou plusieurs des revendications 5 à 9, **caractérisé en ce que** l'élément de liaison (14) comprend au moins une rainure (114) pour un agencement mécaniquement amovible sur la plaque de cuisson (12).

11. Agencement de liaison (150) selon une ou plusieurs des revendications 5 à 10, **caractérisé en ce que** l'élément de liaison (14) est formé de forme tubulaire et présente une première section d'extrémité (116) qui est disposée de manière mécaniquement amovible sur la plaque de cuisson (12) ou dans l'ouverture de passage (13) et une deuxième section d'extrémité (118) qui est logée de manière déplaçable en hauteur dans le dispositif de purification d'air (10).

12. Agencement de liaison (150) selon une ou plusieurs des revendications 5 à 11, **caractérisé en ce que** la pièce de raccordement (15, 155) présente au moins une saillie d'encliquetage (19).

13. Agencement de liaison (150) selon une ou plusieurs des revendications 5 à 12, **caractérisé en ce que** l'adaptateur (18, 180) est formé de forme de manchette et l'élément de liaison (14) est au moins partiellement logé dans l'adaptateur (18, 180).

14. Agencement de liaison (150) selon une ou plusieurs des revendications précédentes, **caractérisé en ce que** l'élément de liaison (14) est formé de forme tubulaire.

15. Agencement de liaison (150) selon une ou plusieurs des revendications précédentes, **caractérisé en ce que** l'élément de liaison (14) comprend au moins une butée radiale (120) pour un élément d'embout (16) de forme tubulaire.

16. Agencement de liaison (150) selon une ou plusieurs des revendications précédentes, **caractérisé en ce que** l'élément de liaison (14) présente au moins une surface d'appui radiale (122) pour l'emboîtement d'un élément d'embout (16) de forme tubulaire.

17. Agencementde liaison (150) selon une ou plusieurs des revendications précédentes, **caractérisé en ce que** l'élément de liaison (14) comprend au moins une rainure (114) pour une connexion par encliquetage mécaniquement détachable.
